(19) Europäisches Patentamt
European Patent Office
Office européen des brevets

(11) **EP 3 578 036 B1**

(12) **EUROPEAN PATENT SPECIFICATION**

(45) Date of publication and mention
of the grant of the patent:
**20.09.2023 Bulletin 2023/38**

(21) Application number: **19177781.2**

(22) Date of filing: **31.05.2019**

(51) International Patent Classification (IPC):
*A01G 13/02* (2006.01)    *A01G 9/14* (2006.01)
*C08K 3/22* (2006.01)    *C08K 3/26* (2006.01)
*C08K 5/33* (2006.01)    *C08K 5/3435* (2006.01)

(52) Cooperative Patent Classification (CPC):
(C-Sets available)
**A01G 13/0268;** A01G 2009/1461; C08K 3/22;
C08K 3/26; C08K 5/32; C08K 5/3435;
C08K 2003/2241; C08K 2003/265; Y02A 40/25

(Cont.)

(54) **DEVELOPMENT OF A FLAME RETARDANT GROUNDCOVER FABRIC FOR GREENHOUSES**

ENTWICKLUNG EINES FLAMMHEMMENDEN BODENBEDECKUNGSGEWEBES FÜR GEWÄCHSHÄUSER

DÉVELOPPEMENT D'UN TISSU DE COUVERTURE VÉGÉTALE IGNIFUGE POUR SERRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2018 GR 20180100240**

(43) Date of publication of application:
**11.12.2019 Bulletin 2019/50**

(73) Proprietor: **Thrace Nonwovens & Geosynthetics
S.A.
67100 Magiko Xanthis (GR)**

(72) Inventor: **MYSTIKOS, Kyriakos
Komotini (GR)**

(74) Representative: **Samouilidis, Emmanouil
Alkyonis 46
175 62 Palaio Faliro (GR)**

(56) References cited:
**WO-A1-2004/076543    WO-A1-2008/026229
JP-A- H06 327 361    US-A1- 2005 050 793**

(52) Cooperative Patent Classification (CPC): (Cont.)

C-Sets
C08K 3/22, C08L 23/10;
C08K 3/26, C08L 23/10;
C08K 5/32, C08L 23/10;
C08K 5/3435, C08L 23/10

**Description**

The present invention relates to groundcover fabrics.

Such ground cover fabrics are for agricultural use. In greenhouses, they are used for floor covering in order to protect plants from unwanted weeds and to maintain the moisture retention in the soil and to protect the soil from solar radiation. Generally, the groundcover material is woven tightly and provides a complete cover.

Examples of groundcover fabrics are described in US 2015/0033622 and US 2016/0174474. US 2015/0033622 describes a reflective groundcover woven fabric for agricultural usage, while US 2016/0174474 describes a groundcover woven fabric, which consists of two different types of tape yarns that have different reflecting, absorbing or transmission properties, for agricultural applications. The groundcover fabrics described therein comprise of narrow tape yarns, usually made of PP, which are woven towards textile formation. The production of oriented tape yarns for the production of woven fabrics that may be potentially used as groundcover fabrics, is described in US 2013/0045346A1.

However, known groundcover fabrics may induce some horticultural issues, the most important being:

a) excessive moisture retention beneath the material, leading to water saturated soils, anaerobic soil conditions, soil compaction, wheel rutting of the ground surface and similar negative effects on the growing conditions due to high soil moisture.

b) excessive restriction on soil heat moving from the soil to the plants above the groundcover fabric, due to not allowing sufficient air and heat movement though the material that can bring about excessively cold conditions at night for the plants/crop above the cover due to the restriction of soil heat radiation from the soil to the plant at night. This night time heat movement from the soil to the plant is important to maintain air temperature for plants above the soil and assist in reducing the occurrence of frost conditions.

Characteristic properties of a groundcover are the cover factors. A cover factor (CV; %) can be determined in both machine direction (MD) and cross direction (CD; %) and are defined as:

$$CV_{MD} = \frac{weft\ tape\ yarn\ width\ (mm) \times weft\ tape\ yarns\ per\ meter\ length}{1000\ mm} \times 100\%$$

$$CV_{CD} = \frac{warp\ tape\ yarn\ width\ (mm) \times warp\ tape\ yarns\ per\ meter\ width}{1000\ mm} \times 100\%$$

In groundcover fabrics the cover factors achieved are higher than 100% due to tape yarn warpage upon weaving (U-shaped tape yarns). This yarn warpage leads to the formation of a light 3D fabric surface. The yarn warpage and the formation of U-shaped tape yarns in the fabric offers two major benefits:

a) preferable water and air permeability properties of the fabric due to the efficient water and air transfer through the fabric and in the soil.

b) relatively high values of cover factor (CV) which, in turn, leads to constriction of the sunlight rays path and weed protrusion, through the groundcover fabric.

The polyolefin tape yarns destined to be used as *warp* along the machine direction (MD), may have widths ranging from 1 to 5 mm and thicknesses from 30 to 80 $\mu$m (1 $\mu$m= $10^{-3}$ mm =$10^{-6}$ μέτρα). Moreover, the polyolefin tape yarns destined to be used as *weft* along the cross direction (CD), may have widths ranging from 2 to 10 mm and thicknesses from 30 to 80 $\mu$m. The width and the thickness of the tape yarns may be different in the warp and the weft direction. The fabric construction is determined from number of weft tape yarns per meter length (CMD) and the warp tapes per meter width (MD).

The weft tapes yarns per meter (CMD) may vary from 300 to 800 and the warp tape yarns per meter (MD) may vary from 800-1500. For groundcover fabrics mainly plain weave is used, but there could also be used different weaving types, like twill or satin. Using such fabric constructions, the cover factors (CV) reach values higher than 100, preferably 120 % for plain weave and higher for twill and satin weave.

Sunlight irradiation degrades groundcover fabrics, when they are exposed to the sun or long periods. Furthermore, the groundcover fabrics are vastly used in greenhouses and spread over large areas inside them which may reach thousands of square meters. In such greenhouse environments fire may start, for example in the case of the electric defects, during repair work involving grinding or welding in the greenhouse. It has been established that such fires can spread very quickly over large areas via the rapid combustion of plastic parts. The fires constitute a danger to personnel present in the greenhouses, and can be destructive to the greenhouse itself and to its contents with major financial losses. Groundcover fabrics are more prone to fire related hazards than covers that are placed at a distance from the ground, such as covers covering openings in greenhouses, tunnels etc.

Flame retardant textile is difficult to produce, on account of the complex and long production process that is involved. Meanwhile, although flame retardant properties may be realized, there is still the problem of preventing or at least retarding the UV degradation, so that the user of the fabric can be guaranteed a particular life span. Flame retardant textile is used in conditions in which the risk of a locally started fire spreading over a larger area is to be avoided.

WO 2008/026229 describes a polymer film for use in agriculture as a cover for greenhouses and tunnels comprising at least one layer of polyolefin-based polymer material including a light stabilizer based on hindered amines and an effective amount of thermoplastic polyurethane and notes that the light stabilizer is constituted by methylated HALS or by sterically hindered aminoxyamines, also known as NOR-HALS.

WO 2004/076543 presents a polymeric or oligomeric hindered amine light stabiliser (HALS) that has as a substituent pendant morpholine group (s), as fire retardant synergist in a composition that is useful for producing a fire-retardant plastics film suitable for use as a cover material for greenhouses or areas provided for cultivation display or retail of plants.

The invention relates to a groundcover that is made of tape yarns comprising polyolefins and HALS additives and formed into a continuous woven product by weaving. Such a ground cover is known from US 2005/050793.

An object of the invention is a groundcover that is fire retardant. A further object of the invention is a groundcover that is fire retardant with properties that do not degrade with time. Yet, another object of the invention is a groundcover that is flame retardant and resists UV radiation over relatively long periods. A further object of the invention is the production of tape yarns that are suitable for such ground covers.

The invention is defined in independent claim 1.

The weight content of the NOR-HALS additives may be 0.2% - 3% of the total weight of the tape yarn, and in a preferred embodiment 0.5%.

The weight content of the HALS additives may be 0.1% - 3% of the total weight of the tape yarn, and in a preferred embodiment 1.5%.

The tape yarns may be either from polyethylene or polypropylene. The functionality of the FR and UV additives may be enhanced by the presence of calcium carbonate, $CaCO_s$, preferably between 2% - 10% calcium and/or titanium dioxide, $TiO_2$, preferably between and 0.5% - 3% The ranges refer to the weight content over the total weight of the tape yarns.

A groundcover fabric according to the invention may be produced in the form of black, beige, grey, green and white pigmented plastic groundcover woven fabric. A black groundcover fabric material contains carbon black pigment and a white groundcover fabric contains $TiO_2$. Green and beige groundcovers contain other color pigments

A groundcover fabric, according to the invention maintains the properties and the geometrical characteristics of a woven structure, such as the woven structure, i.e. opening size etc.

A groundcover according to the invention achieves improved safety, as it combines FR and UV resistance properties. According to the invention, the groundcover does not include retardant additives that are used in known polyolefin oriented film and tape yarns and which hinder the commonly UV inhibitors, such as HALS, used in polyolefin film production. Thus, the groundcovers according to the invention may be broadly used, as may resist sunlight radiation.

According to the invention, there is no need to use halogen-based flame retardant substances or sulphur or phosphorus containing flame retardants additives, which are currently used in polyolefin extruded products. Furthermore, the enhancement of the flame retardant properties is not realized in expense of the UV stability.

The invention incorporates a flame retardant (FR) substance for woven agricultural products, which does not comprise sulphur, halogens or phosphorus containing additives. Such a halogen-free flame retardant substance is the alkoxyamine hindered amine stabiliser, abbreviation: NOR-HALS, described in US 2015/0284535.

Regarding the fire properties of polyolefin woven groundcover fabrics, and plastic objects in general, reference is usually made to the fire tests, i.e. EN ISO 11925-2:2010 and ISO 9239-1:2010, and classification according to EN 13501-1:207+A1:2009 or DIN4102-1:1998. According to the invention the groundcovers attain class B1 or B2 according to DIN4102-1:1998 and as $B_{fl}$-s1 class as flooring element and D-s1-d0 or up to B-s1-d0 as construction product according to EN13501-1:2007+A1:2009.

As already mentioned, ground cover materials are used in agriculture for several purposes including weed suppression and/or soil warmth retention and/or moisture retention and/or for light reflecting. These properties are also dependent on the color of the groundcover fabric. Currently known important woven ground covers may have the following colors:

a) black pigmented plastic groundcover woven fabric,
b) grey pigmented plastic groundcover woven fabric
c) green pigmented plastic groundcover woven fabric
d) beige pigmented plastic groundcover woven fabric, and
e) white pigmented plastic groundcover woven fabric.

In general, black plastic ground covers typically warm the soil more than other pigmented ground covers. Black pigmented ground cover material is preferred for weed suppression. Grey, green and beige plastic ground covers are used for weed suppression as well but giving also aesthetics over other colored pigmented ground covers. White pigmented plastic ground covers used where an increase reflected light into the plant canopy is required. White pigmented ground covers are produced from plastic polymer pigmented with the white titanium dioxide pigment.

In one embodiment of the invention, the PP-tape yarns, that are produced prior fabric construction, i.e. weaving, may contain both HALS 0.1% - 3%, preferably more than 1% and NOR-HALS 0.2% - 3%, preferably more than 0.4%. The functionality of the FR and UV additives may be enhanced by the presence of 2% - 10% $CaCO_3$ and 0.5% - 3% $TiO_2$. All contents in % refer to the weight of the additive, i.e. HALS, NOR-HALS, $CaCO_3$ and 0.5% - 3% $TiO_2$ over the total weight of the tape yarns. Unless, it is explicitly noted they refer to both in weft and in warp. The polyolefin tape yarns used as warp along the machine direction (MD) have 3 mm width and thicknesses of 45 $\mu$m. Moreover, the polyolefin tape yarns destined to be used as weft along the cross direction (CD), have 1.3 mm width and 45 $\mu$m thickness. In the proposed embodiment, the weft tape yarns per meter (MD) is 400 and the warp tape yarns per meter (CD) is 920. Using such fabric construction, the cover factor (CV) is 120 %. In that embodiment, the fabric has a plain weave.

An example of a groundcover fabric according to the invention was tested and classified as B2 class using DIN4102-1:1998 standard. The example was produced by PP tape yarns and contained 1.6% HALS, 0.5% NOR-HALS and 2.4% $CaCO_3$. As noted above all percentages are weight content over the total weight of the tape yarns. It is worth noting that using the proposed recipe, no droplets of molten polymer were observed and the fire spread was significantly reduced when compared to a groundcover fabric not containing NOR-HALS additives. Products classified as B2 according to DIN4102-1:1998 are capable of resisting, for a longer period, a small flame attack without substantial flame spread. In addition, they are also capable of undergoing thermal attack by a single burning item with sufficiently delayed and limited heat release. The material was also tested according to EN ISO 11925-2:2010 and ISO 9239-1:2010, for classification according to EN13501-1:2007+A1:2009. The tested groundcover was classified as $B_{fl}$-s1 class.

These improved FR properties is attributed to the synergistic effect of HALS and NOR-HALS additives. Further improved properties properties may be attributed to the synergistic effect of $CaCO_3$ and $TiO_2$ with the HALS and NOR-HALS additives. Furthermore, it is possible to achieve even B1 class by using NOR-HALS in higher concentrations, e.g. 2%. B1 class is as B2 but satisfying more stringent requirements. Additionally, under the thermal attack by a single burning item they have limited lateral spread of flame.

Furthermore, the UV-resistance of the above mentioned example of the groundcover fabric was evaluated using EN12224:2000 standard for 2000 hours under UVA lamp irradiation with wavelength 340nm, irradiance intensity 0.83 W/m$^2$, using cyclic tests comprising of the following stages: exposure for 5h at a black standard temperature of 50 °C $\pm$ 3 °C (°C: grad Celsius) and 1h spray at 25 °C. Results revealed that after 2000 hours, the woven groundcover fabric retains more than 50% of its tensile strength and does not show significant signs of wear. In that embodiment, the water flow rate according EN11058 with a water head column of 50 mm was 900 lt/min/m$^2$ (liters per minute per square meter).

The combined effect of HALS and NOR-HALS is further depicted by results obtained from tests according to EN ISO 11925-2:2010, EN ISO 9239-1:2010, EN13501-1:2007+A1:2009, BS EN 13501-1:2007+A1:2009 and DIN4102-1:1998-05. Two different configurations were tested, i.e. white polypropylene slit-film tape woven fabric with weight per unit area equal to 100 g/m$^2$ and 130 g/m$^2$. In both configurations the weight content in HALS and NOR-HALS is 1.6% and 0.5% respectively. Specifically, regarding the ignitability performance of the product according to EN ISO 11925-2:2010, it successfully passed as no signs of surface ignition were observed. Moreover, regarding the floor radiant panel test according to EN ISO 9239-1:2010, the product (fabric) did not ignite and the fabric melts and retracts itself from the ignition source. Furthermore, the fabric is classified as $B_{fl}$-s1 class, according EN13501-1:2007+A1:2009 (reaction to fire). The tests were performed in accordance with EN ISO11925-2:2010 and EN ISO 9239-1:2010. Finally, in reaction to fire test according to DIN4102-1:1998-05 the fabric is classified as class B2 building material.

On the other hand corresponding configurations with HALS only, weight content of HALS 1.6%, could not attain class E in tests according to EN13501.

According to the invention, a groundcover fabric is made of PP tape yarns with NOR-HALS additives and it is formed into a continuous woven product by weaving, with improved flame retardancy. The groundcover fabric can be produced in the form of black, grey, green and white pigmented plastic groundcover woven fabric. A ground cover fabric material wherein the black pigment is carbon black and the white is $TiO_2$. Further, a groundcover fabric according to the invention maintains the geometrical characteristics of the woven structure, i.e. opening size etc.

The present invention relates to groundcover fabrics that function to provide protection and moisture control of soil in greenhouses. Moreover, the invention relates particularly to flame retardant and at the same time UV-resistant fabrics for use in greenhouses, mainly ground cover fabrics that consist of polyolefin (PP, PE) tape yarns that can be converted into a large, flat and pliable product, such as a cloth, by weaving. Furthermore, the groundcover fabric apart from the improved flame retardant properties, also possesses long-term UV resistance. It is worth noting that the addition of flame retardant substances, during the production of tape yarns, does not affect the geometrical characteristics of the woven structure of the groundcover fabric and thus the groundcover fabric maintains its geometrical characteristics and water permeability properties. The improved and combined UV resistance and FR properties for example of white groundcover fabric is achieved by modifying accordingly the recipe of the polyolefin tape yarn.

In the present the terms «fabric» and «textile» are used as synonyms.

**Claims**

1. A groundcover fabric that is made of tape yarns, which are made of polyethylene or polypropylene, the tape yarns comprising HALS additives and being formed into a continuous woven product by weaving, **characterized in that** the tape yarns contain NOR-HALS additives.

2. A groundcover fabric, according to claim 1, whereby the weight of the NOR-HALS in the tape yarns in weft is within the range of 0.1% - 3%, preferably in the range 0.4% - 3%, of the total weight of the tape yarns in weft and the weight of the NOR-HALS in the tape yarns in warp is within the range of 0.1% - 3%, preferably in the range 0.4% - 3%, of the total weight of the tape yarns in warp.

3. A groundcover fabric, according to any one of claim 1 or claim 2, whereby the weight of the HALS in the tape yarns in weft is within the range of 0.2% - 3%, preferably in the range 1% - 3%, of the total weight of the tape yarns in weft and the weight of the HALS in the tape yarns in warp is within the range of 0.2% - 3%, preferably in the range 1% - 3%, of the total weight of the tape yarns in warp.

4. A groundcover fabric, according to claim 1, whereby the weight of the NOR-HALS in the tape yarns is within the range of 0.1% - 3%, preferably in the range 1% - 3%.

5. A groundcover fabric, according to any one of claims 1 to 4, whereby the tape yarns contain CaCOs, preferably less than 10% of the total weight of the tape yarns, and/or $TiO_2$, preferably less than 3% of the total weight of the tape yarns.

6. A groundcover fabric, according to claim 5, whereby the tape yarns contain $CaCO_3$ and the weight of the $CaCO_3$ in the tape yarns is within the range of 2%-10% of the total weight of the tape yarns.

7. A groundcover fabric, according to the claim 5 or claim 6, whereby the tape yarns contain $TiO_2$ and the weight of the $TiO_2$ in the tape yarns is within the range of 0.5% - 3% of the total weight of the tape yarn.

8. A groundcover fabric, according any one of claims 1 to 7, which is produced in the form of black pigmented groundcover fabric and the black pigment is carbon black or which is produced in the form of white pigmented groundcover fabric and the white pigment is $TiO_2$.

9. A groundcover fabric, according any one of claims 1 to 8 with fire resistance classified in B1 or B2 according to DIN4102-1:1998 standard.

10. A groundcover fabric, according any one of claims 1 to 9 with fire resistance classification class at least D-s1-d0 or up to B-s1-d0 class, according EN13501-1:2007+A1:2009.

11. A groundcover fabric, according any one of claims 1 to 10 with fire resistance classification class at least $B_{fl}$-s1 or higher, according EN13501-1:2007+A1:2009.

**Patentansprüche**

1. Bodenbedeckungsgewebe, das aus Bandgarnen besteht, die aus Polyethylen oder Polypropylen bestehen, wobei die Bandgarne HALS-Additive umfassen und durch Weben zu einem durchgehenden Webprodukt gebildet sind, **dadurch gekennzeichnet, dass** die Bandgarne NOR-HALS-Additive enthalten.

2. Bodenbedeckungsgewebe nach Anspruch 1, wobei das Gewicht der NOR-HALS in den Bandgarnen im Schuss im Bereich von 0,1 % - 3 %, vorzugsweise im Bereich von 0,4 % - 3 %, des Gesamtgewichts der Bandgarne im Schuss liegt und das Gewicht der NOR-HALS in den Bandgarnen in der Kette im Bereich von 0,1 % - 3 %, vorzugsweise im Bereich von 0,4 % - 3 %, des Gesamtgewichts der Bandgarne in der Kette liegt.

3. Bodenbedeckungsgewebe nach einem von Anspruch 1 oder Anspruch 2, wobei das Gewicht der HALS in den Bandgarnen im Schuss im Bereich von 0,2 % - 3 %, vorzugsweise im Bereich von 1 % - 3 %, des Gesamtgewichts der Bandgarne im Schuss liegt und das Gewicht der HALS in den Bandgarnen in der Kette im Bereich von 0,2 % - 3 %, vorzugsweise im Bereich von 1 % - 3 %, des Gesamtgewichts der Bandgarne in der Kette liegt.

4. Bodenbedeckungsgewebe nach Anspruch 1, wobei das Gewicht der NOR-HALS in den Bandgarnen im Bereich von 0,1 % - 3 %, vorzugsweise im Bereich von 1 % - 3 % liegt.

5. Bodenbedeckungsgewebe nach einem der Ansprüche 1 bis 4, wobei die Bandgarne $CaCO_3$, vorzugsweise weniger als 10 % des Gesamtgewichts der Bandgarne, und/oder $TiO_2$, vorzugsweise weniger als 3 % des Gesamtgewichts der Bandgarne, enthalten.

6. Bodenbedeckungsgewebe nach Anspruch 5, wobei die Bandgarne $CaCO_3$ enthalten und das Gewicht des $CaCO_3$ in den Bandgarnen im Bereich von 2 % - 10 % des Gesamtgewichts der Bandgarne liegt.

7. Bodenbedeckungsgewebe nach Anspruch 5 oder Anspruch 6, wobei die Bandgarne $TiO_2$ enthalten und das Gewicht des $TiO_2$ in den Bandgarnen im Bereich von 0,5 % - 3 % des Gesamtgewichts des Bandgarns liegt.

8. Bodenbedeckungsgewebe nach einem der Ansprüche 1 bis 7, das in Form eines schwarz pigmentierten Bodenbedeckungsgewebes hergestellt ist und das schwarze Pigment Ruß ist, oder das in Form eines weiß pigmentierten Bodenbedeckungsgewebes hergestellt ist und das weiße Pigment $TiO_2$ ist.

9. Bodenbedeckungsgewebe nach einem der Ansprüche 1 bis 8 mit einem Feuerwiderstand, der nach Norm DIN4102-1:1998 in B1 oder B2 klassifiziert ist.

10. Bodenbedeckungsgewebe nach einem der Ansprüche 1 bis 9 mit einer Feuerwiderstandsklassifikationsklasse von mindestens Klasse D-s1-d0 oder bis zu B-s1-d0 nach EN13501-1:2007+A1:2009.

11. Bodenbedeckungsgewebe nach einem der Ansprüche 1 bis 10 mit einer Feuerwiderstandsklassifikationsklasse von mindestens $B_{fl}$-s1 oder höher nach EN13501-1:2007+A1:2009.

**Revendications**

1. Tissu de revêtement de sol qui est fait de fils de bandelette, qui sont faits de polyéthylène ou de polypropylène, les fils de bandelette comprenant des additifs de HALS et prenant la forme d'un produit tissé continu grâce à un tissage, **caractérisé en ce que** les fils de bandelette contiennent des additifs de NOR-HALS.

2. Tissu de revêtement de sol selon la revendication 1, selon lequel le poids de la NOR-HALS dans les fils de bandelette en trame est dans la plage de 0,1 % à 3 %, de préférence dans la plage de 0,4 % à 3 %, du poids total des fils de bandelette en trame et le poids de la NOR-HALS dans les fils de bandelette en chaîne est dans la plage de 0,1 % à 3 %, de préférence dans la plage de 0,4 % à 3 %, du poids total des fils de bandelette en chaîne.

3. Tissu de revêtement de sol selon l'une quelconque de la revendication 1 ou la revendication 2, selon lequel le poids de la HALS dans les fils de bandelette en trame est dans la plage de 0,2 % à 3 %, de préférence dans la plage de 1 % à 3 %, du poids total des fils de bandelette en trame et le poids de la HALS dans les fils de bandelette en chaîne est dans la plage de 0,2 % à 3 %, de préférence dans la plage de 1 % à 3 %, du poids total des fils de bandelette en chaîne.

4. Tissu de revêtement de sol selon la revendication 1, selon lequel le poids de la NOR-HALS dans les fils de bandelette est dans la plage de 0,1 % à 3 %, de préférence dans la plage de 1 % à 3 %.

**5.** Tissu de revêtement de sol selon l'une quelconque des revendications 1 à 4, selon lequel les fils de bandelette contiennent de la CaCOs, de préférence moins de 10 % du poids total des fils de bandelette, et/ou du $TiO_2$, de préférence moins de 3 % du poids total des fils de bandelette.

**6.** Tissu de revêtement de sol selon la revendication 5, selon lequel les fils de bandelette contiennent de la $CaCO_3$ et le poids de la $CaCO_3$ dans les fils de bandelette est dans la plage de 2 % à 10 % du poids total des fils de bandelette.

**7.** Tissu de revêtement de sol selon la revendication 5 ou la revendication 6, selon lequel les fils de bandelette contiennent du $TiO_2$ et le poids du $TiO_2$ dans les fils de bandelette est dans la plage de 0,5 % à 3 % du poids total des fils de bandelette.

**8.** Tissu de revêtement de sol selon l'une quelconque des revendications 1 à 7, qui est produit sous la forme d'un tissu de revêtement de sol pigmenté noir et le pigment noir est du noir de carbone ou qui est produit sous la forme d'un tissu de revêtement de sol pigmenté blanc et le pigment blanc est du $TiO_2$.

**9.** Tissu de revêtement de sol selon l'une quelconque des revendications 1 à 8 avec une résistance au feu classée B1 ou B2 selon la norme DIN 4102-1:1998.

**10.** Tissu de revêtement de sol selon l'une quelconque des revendications 1 à 9 avec une classification de résistance au feu de classe au moins D-s1-d0 ou jusqu'à une classe B-s1-d0, selon EN 13501-1:2007+A1:2009.

**11.** Tissu de revêtement de sol selon l'une quelconque des revendications 1 à 10 avec une classification de résistance au feu de classe au moins $B_{fl}$-s1 ou supérieure, selon EN 13501-1:2007+A1:2009.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150033622 A
- US 20160174474 A
- US 20130045346 A1
- WO 2008026229 A
- WO 2004076543 A
- US 2005050793 A
- US 20150284535 A